(19) **Europäisches Patentamt**
**European Patent Office**
**Office européen des brevets**

(11) **EP 2 075 699 A1**

(12) **EUROPEAN PATENT APPLICATION**

(43) Date of publication:
**01.07.2009 Bulletin 2009/27**

(51) Int Cl.:
***G06F 9/50*** (2006.01)

(21) Application number: **07025232.5**

(22) Date of filing: **28.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Matrix ABC d.o.o**
**10000 Zagreb (HR)**

(72) Inventor: **Vuksanic, Marija**
**c/o Matrix ABC d.o.o**
**Zagreb, 10000 (HR)**

(74) Representative: **Fritsche, Rainer**
**Eisenführ, Speiser & Partner**
**Postfach 31 02 60**
**80102 München (DE)**

Remarks:
Amended claims in accordance with Rule 137(2) EPC.

(54) **Workload distribution in parallel computing systems**

(57) The present invention relates to a method, apparatus, system and computer program for controlling distribution of workload in a parallel computing system. Data to be processed by the parallel computing system are decomposed into a plurality of subdomains, based on which the workload distribution between participants of the parallel computing system is controlled.

EP 2 075 699 A1

**Description**

FIELD OF THE INVENTION

The present invention relates to the field of parallel computing systems. In particular, the present invention relates to the distribution of workload on available resources within a parallel computing system.

BACKGROUND

Parallel computing systems are used to solve problems that otherwise cannot be solved on any single computer in an acceptable time interval, no matter how powerful this single computer is.

In parallel computing systems one of the most demanding tasks is how to distribute workload on the available resources such as e.g. computational (processing) resources like computers in the most optimal way. By optimally distributing work-load it is understood how to distribute workload on available resources in a way that processing resources will be exploited efficiently, e.g. a computational effort will be reduced.

Herein the availability of the resources in a certain parallel computing system depends on their utilization with various tasks. As these tasks are dynamically changing with time, the problem of how to optimally distribute workload is even more difficult to solve.

Furthermore, the communication speed between parallel resources depends on the throughput of a communication network interconnecting these resources, and because of the variable workload, the throughput of the network is changing with time.

In view of all the facts mentioned, it is clear that optimal distribution of workload in parallel computing systems is one of the most difficult and demanding tasks in the modern computational practice and theory.

In recent years, efficient algorithms (an efficient algorithm is one that provides a solution of a given problem in an acceptable time interval) able to find optimal solutions on large data sets (e.g. large matrices) have been developed by mathematicians. Among them, there are algorithms that can solve various min/max eigenvalue problems. A Second Largest Eigenvalue in Magnitude (SLEM) represents a cycle time of one iteration of a parallel algorithm executing on a parallel processing system. An idea of representing a data flow in a parallel processing system by means of a deterministic matrix and then minimizing it's SLEM fails immediately, because to date there is no algorithm for minimizing the SLEM of a deterministic, even symmetric matrix.

SUMMARY OF THE INVENTION

It is an object of the present invention to control workload distribution such that the following can be achieved:

a) Utilization of available computational resources should be equal.

b) Communication between computational resources should be performed over communication links with highest throughput, thus lowering the time need for data exchange between computational resources and minimizing communication times.

c) Items a) and b) should be achieved concurrently.

According to the proposed solution, information about at least one of performance, utilization and throughput within a parallel computing system is collected. Data to be processed by the parallel computing system are decomposed into a plurality of subdomains. Based thereon, a workload distribution between participants of the parallel computing system is controlled.

Thus, workload distribution can be performed in a way that guarantees the shortest execution time of parallel processes or algorithms performed on the parallel computing system. The proposed solution deploys some novel and advanced procedures, like matrix summarization, matrix transformation from a deterministic original to the stochastic domain, eigenvalue optimization etc.

The proposed solution can be implemented by a method, an apparatus or a computer program, wherein the apparatus may be part of the parallel computing system.

BRIEF DESCRIPTION OF THE DRAWINGS

Fig. 1    shows a schematic diagram of a proposed workload distribution control system according to an embodiment.

Fig. 2    shows an example of 1D domain decomposition with boundary and initial conditions.

Fig. 3    shows 2D Laplacian solver execution times on a square grid with 10.000 data elements.

Fig. 4    shows 2D Laplacian solver execution times on a square grid with 99.856 elements.

Fig. 5    shows 2D Laplacian solver execution times on a square grid with 998.001 elements.

Fig. 6    shows relative a performance gain of a proposed data distribution according to the embodiment over uniform based data distribution.

DETAILED DESCRIPTION OF AN EMBODIMENT

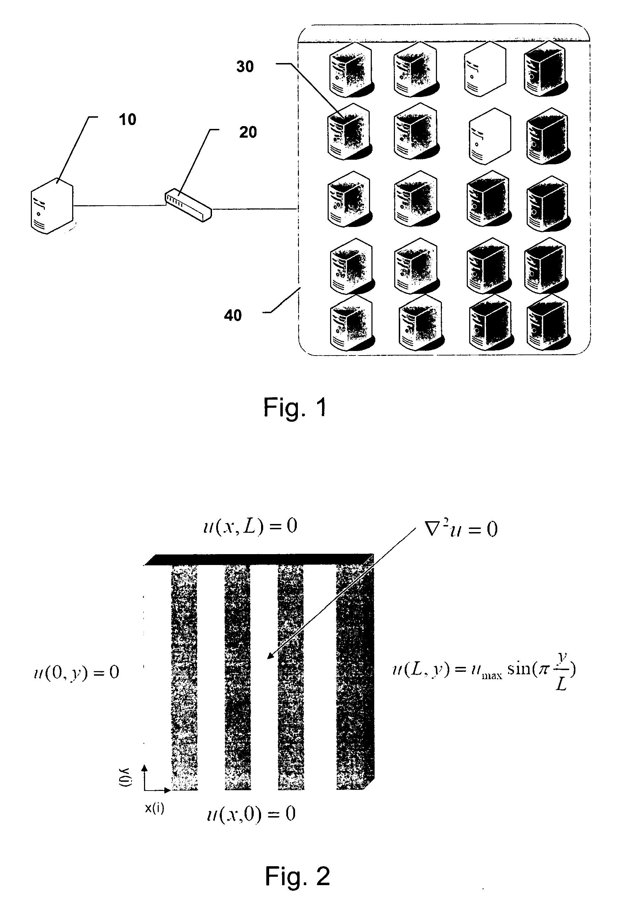

Fig. 1 shows a proposed workload distribution control (balancing) system comprising a cluster management node 10, a switch 20 and a plurality of computing nodes 30 (e.g. 20 computing nodes). The computing nodes 30 can run an operating system (e.g. Fedora Linux), a parallel programming interface and a resource manager (e.g. a Torque resource manager). They may be e.g. computers. The parallel programming interface can be e.g. an Open Message Passing Interface (MPI), a computer software that allows to write and compile computer programs and then execute them concurrently on a large number of interconnected computers.

The proposed workload distribution control system as shown in Fig. 1 can comprise computing nodes 30 with different processors, such as 2.9 GHz, 1.3 GHz and 1.0 GHz processor based computing nodes. Half of the computing nodes 30 may comprise a single-core processor (e.g. Intel Pentium 2.9 GHz with 512 MB RAM machines), while the rest of them may be a mix of nodes comprising other processors (e.g. two nodes with an Intel Pentium 1.3 GHz processor and eight nodes with an Intel Pentium 1.0 GHz processor, while the amount of RAM may be 256 MB). The computing nodes 30 may be interconnected via the switch 20 (e.g. a 100 Mb/s Ethernet switch) in a star topology structure. They can be interconnected with some kind of high speed interconnection network.

The computing nodes 30 form a computing nodes cluster (farm) 40. They may be used to solve large computational problems that cannot be solved by using only a single computing node. This can be achieved by High Performance Computing (HPC), a procedure for solving a large computational problem on an array of computing nodes (e.g. computers) interconnected with a high speed interconnection network. That is, the computing nodes cluster 40 may be e.g. a HPC cluster, and the proposed workload distribution control system can be e.g. a testbed HPC system.

The cluster management node 10 may comprise for example an Intel Pentium 2.9 MHz processor, 2GB RAM and Fedora Linux, Open MPI, Torque resource manager and Scilab math package. Even if only one cluster management node 10 is depicted in Fig. 1, the workload distribution control system can comprise a plurality of cluster management nodes.

The basic principle of the proposed workload distribution is as follows. An algorithm for minimizing SLEM of a stochastic matrix representing Markov chains is made useful for load-balancing purposes, by using an algorithm that can transform a real and non-negative deterministic matrix to a symmetric and doubly stochastic (sum over any column or row equals one) matrix. The SLEM based load balancing system works as follows:

1) A deterministic data-flow matrix is built from a given data set and measured performance data of a processing system for processing the data set.

2) This matrix is transformed to a symmetric and doubly stochastic matrix.

3) The symmetric and doubly stochastic matrix is optimized by minimizing it's SLEM.

4) The optimized matrix is reverted back to it's deterministic form.

5) Performance data are extracted from the deterministic matrix, so this matrix now represents optimal load distribution.

In more detail, the proposed SLEM based workload distribution control (balancing) system can be a software that runs on one or more cluster management node(s) 10, collects data about the performance and the utilization of available computing nodes 30 and the throughput of communication links between them, and then performs a workload partition in a way which guarantees the shortest execution time of one or more parallel algorithm(s) performing on the computing nodes cluster 40.

In a first step, the management node(s) 10 collect(s) effective processing speeds of computing nodes 30 and link bandwidths of the communication links between them. From collected values a square matrix is constructed, with main diagonal elements representing effective processing speeds (respectively abbreviated as eps) and of-the-main-diagonal elements representing link bandwidths (respectively abbreviated as bw). This matrix is denoted with $Y$ and called admittance matrix. The eps of an i-th computing node is computed according to an equation (1):

$$eps_i = \sum_{j=1}^{n} \frac{ps_{ij}}{u_{ij}} , \qquad (1)$$

wherein $n$ is a number of processor cores within the i-th computing node, $ps_{ij}$ denotes a frequency a j-th processor core is working on, and $u_{ij}$ stands for j-th processor core utilization. In general, the admittance matrix will take the following form:

$$Y = \begin{bmatrix} eps_1 & bw_{12} & . & bw_{1n} \\ bw_{21} & eps_2 & . & bw_{2n} \\ . & , & . & . \\ bw_{n1} & . & bw_{n,n-1} & eps_n \end{bmatrix} \qquad (2)$$

$Y$ is in general a non-symmetric matrix. For example, $bw_{12}$ and $bw_{21}$ are not necessarily the same. Because a communication time between two nodes will be bounded by the slower node of them, $Y$ can be rewritten in it's symmetric counterpart:

$$Y_s = \begin{bmatrix} eps_1 & \min(bw_{12},bw_{21}) & . & \min(bw_{1n},bw_{n1}) \\ \min(bw_{21},bw_{12}) & eps_2 & . & \min(bw_{2n},bw_{n2}) \\ . & , & . & . \\ \min(bw_{n1},bw_{1n}) & . & \min(bw_{n,n-1},bw_{n-1,n}) & eps_n \end{bmatrix}$$

$$(3)$$

Depending on a graph presentation of a problem that has to be solved on the computing nodes cluster 40, the 2nd matrix on the management node(s) 10 is constructed. This matrix is a square matrix, and has a form of the weighted adjacency matrix, with main diagonal elements representing number of operations computing nodes have to perform, and of-the-main-diagonal elements representing number of messages computing nodes have to exchange with each other. This matrix is called grid adjacency matrix and denoted with $A$. In general, the grid adjacency matrix will take the following form:

$$A = \begin{bmatrix} a_{11} & a_{12} & . & a_{1n} \\ a_{21} & a_{22} & . & a_{2n} \\ . & . & . & . \\ a_{n1} & a_{n2} & . & a_{nn} \end{bmatrix} \qquad (4)$$

In a next step, the management node(s) 10 perform(s) a Hadamard matrix multiplication between $Y_s$ and $A$. A resulting matrix is called data-flow matrix and denoted with $P_n$:

$$P_n = \begin{bmatrix} eps_1 \cdot a_{11} & \min(bw_{12},bw_{21}) \cdot a_{12} & . & \min(bw_{1n},bw_{n1}).a_{1n} \\ \min(bw_{21},bw_{12}) \cdot a_{21} & eps_2 \cdot a_{22} & . & \min(bw_{2n},bw_{n2}) \cdot a_{2n} \\ . & . & eps_3/a_{33} & . \\ \min(bw_{n1},bw_{1n}) \cdot a_{n1} & \min(bw_{n2},bw_{2n}) \cdot a_{n2} & . & eps_4 \cdot a_{44} \end{bmatrix}$$

$$(5)$$

$P_n$ is a deterministic and symmetric matrix. Maybe one day an algorithm for directly minimizing SLEM of the deterministic and symmetric matrix will be found, but at present no such algorithm exists. However, $P_n$ can be converted into its stochastic and symmetric counterpart, for which a SLEM minimizing algorithm is known. By applying the following recursive equation with n as an recursion index, $P_n$ can be transformed to its stochastic like counterpart:

$$P_{n+1} = (D_n)^{-1/2} P_n (D_n)^{-1/2}; \quad n = 1,...,\infty \qquad (6)$$

$D_n$ stands for the diagonal node matrix of $P_n$ defined as:

$$D_n = \begin{bmatrix} d_1 & 0 & 0 & 0 \\ 0 & d_2 & 0 & 0 \\ 0 & 0 & . & 0 \\ 0 & 0 & 0 & d_n \end{bmatrix} \qquad (7)$$

Each element on the main diagonal of $D_n$ is a sum of the corresponding row of $P_n$:

$$d_i = \sum_{j=1}^{n} P_{ij}; \quad i = 1, ..., n \qquad (8)$$

Obviously, it is impossible to do a recursion until $n_{max} = \infty$ will be reached. However, it has been experimentally found out that with $n_{max} = 100$ a good approximation of the symmetric and doubly stochastic matrix (a doubly stochastic matrix is a matrix with a sum over any column or row that equals one) can be obtained. That means, instead of 1, the sum of every column or row of the derived doubly stochastic matrix will take a value $\geq 0.9999$. A symmetric and doubly stochastic like approximation of the matrix $P_n$ is denoted with $P$.

Now it is possible to directly perform a SLEM minimization of the matrix $P$. The optimization problem can be written as:

$$\text{minimize:} \quad \mu(P) \qquad (9)$$

$$\text{subject to:} \quad P \geq 0, \ P1 = 1, \ P = P^T$$

An optimized version of the matrix $P$ is denoted with $Q_n$. As the optimal load balancing strategy is searched for, the matrix $Q_n$ has to be transformed to the deterministic domain. The inverse form of the equation (6) can do this:

$$Q_{n-1} = (D_n)^{1/2} Q_n (D_n)^{1/2} \; ; \; n = \infty,...,1 \qquad (10)$$

Because the same reasoning as for the equation (6) also holds for the equation (10), an approximate equation can be used instead:

$$Q_{n-1} = (D_n)^{1/2} Q_n (D_n)^{1/2} \; ; \; n = 100,...,1 \qquad (10a)$$

At the end of the recursive process in the equation (10a), a matrix $Q_0$ is obtained, and it gives an optimal data-flow for a given computing nodes cluster. In order to obtain an optimal workload distribution on the computing nodes, the optimal data-flow has to be converted into a number of operations that computing nodes have to perform. One way to do this is to use trace of the matrix, which gives the sum of the matrix main-diagonal elements. The optimal workload distribution $A_0$ will then be:

$$A_0 = \frac{trace(A)}{trace(Q_0)} Q_0 \qquad (11)$$

As a test application, a two-dimensional (2D) Laplacian solver (e.g. a Laplacian 2D solver) has been written in Open MPI and applied to 2D data sets of various grid sizes. The equations (1) to (4) have been implemented in a Linux bash shell, while the equations (5) to (10) have been implemented in a Scilab math programming language (more specifically, the equation (9) has been written with the aid of the Scilab LMITOOL package). The size of a 2D data set (rectangular array) containing test data has been varied in three merely exemplary increments: 100 x 100, 316 x 316 and 999 x 999, resulting in 10000, 99.856 and 998.001 data elements. A one-dimensional (1D) domain decomposition approach of the 2D data sets has been chosen.

An example of the 1D domain decomposition of the rectangular 2D data sets is shown in Fig. 2. A 1D domain decomposition over the x dimension is illustrated, and a rectangular data set domain of size $L \times L$ is broken into eight stripe-formed (stripe-shaped) subdomains of equal size. $\nabla^2_u = 0$ represents a partial differential Laplace's equation, wherein $\nabla^2$ is a Laplacian operator, while $u(x,0) = 0$ , $u(0, y) = 0$ , $u(x,L) = 0$ and $u(L,y) = u_{max} \sin(\pi \frac{y}{L})$ represent boundary and initial conditions of the scalar potential, i.e. data values at the boundaries of the rectangular data set and at time 0. After decomposition of the data set, a Laplace's equation can be executed (solved) concurrently on maximum eight computing nodes, with each computing node executing (solving) a Laplace's equation of it's own data set (subdomain) and exchanging boundary data with it's neighboring computing node after each iteration.

In the case of 2D domain decomposition, decomposition has to be performed over the x dimension and the y dimension, thus decomposing the data domain (set) into rectangular-formed subdomains.

In the example of Fig. 2, each run of the 2D Laplacian solver has been performed in 10.000 iterations, and execution times have been measured by means of corresponding MPI routines. In addition, the number of computing nodes has been gradually incremented, starting with a fast node, then adding a slow node to the computing nodes cluster, then a fast node and so on until all computing nodes have been utilized. In each run, the 1D domain decomposition approach has been used, and the data domain has been decomposed into a number of stripes that equals the number of computing nodes.

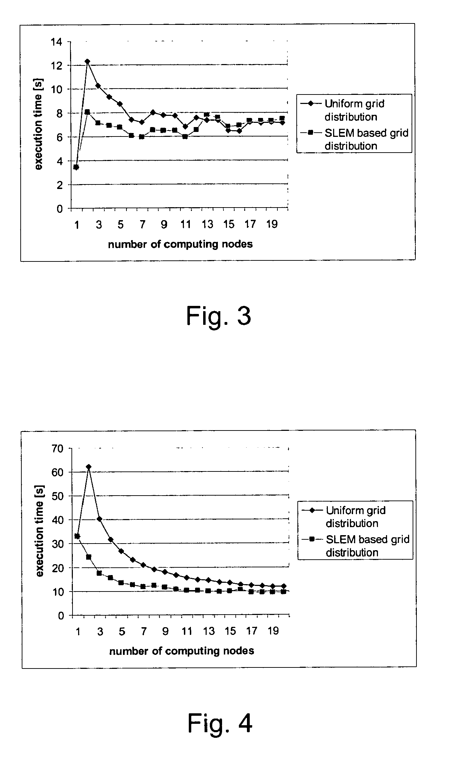

In order to perform a validation of the proposed SLEM based optimization, each run has been performed two times. First time the data domain has been decomposed into stripes with equal width, second time into stripes with various widths determined by the SLEM based optimization system. Each run of the 2D Laplacian solver has been performed in 10.000 iterations. In addition, the number of computing nodes has been gradually incremented, starting with a fast node, then adding a slow node to the computing nodes cluster, then a fast node and so on until all computing nodes have been utilized. The results are shown in the charts of Fig. 3 to 5.

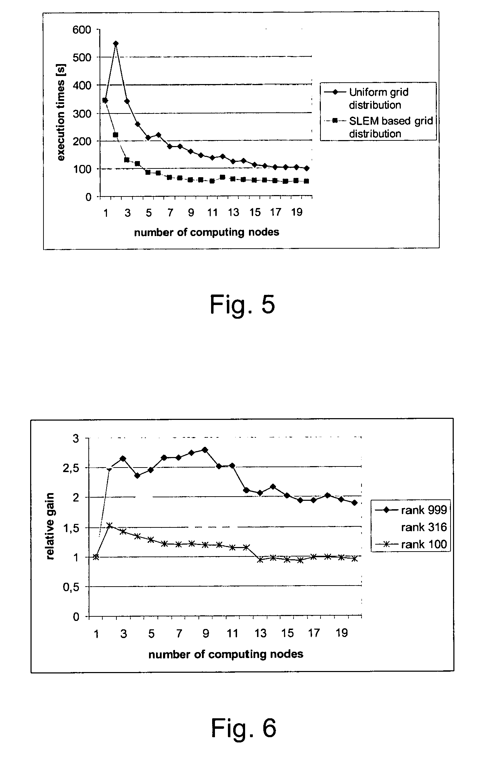

The ratio between execution times obtained with the SLEM based data distribution and the uniform distribution is shown in Fig. 6. As visible in Fig. 6, the performance gain of the SLEM based data distribution over the uniform distribution increases with the size of the computational problem. While at a small problem size with 10.000 data points the performance gain is relatively low and practically disappears after adding the 13th node, the performance gain on the problem size with nearly one million points is significant and keeping up while the number of processing nodes is increasing. This phenomenon is due to the exponential relation between data processing within computing nodes and MPI based message exchange with their adjacent nodes. With a square data array arrangement such as tested in this case, the number of the MPI messages between computing nodes increases linearly with the problem size, while the number of points processed locally within computing nodes increases exponentially with a factor 2. As a consequence, the ratio between overall local processing and the communication increases, thus preventing slower nodes to slow down faster nodes.

The proposed workload distribution control system has been implemented and tested on a supercomputer built as a high-performance Linux computing cluster comprising twenty nodes. The parallel application which serves as a part of the control system has been developed and implemented as a 2D Laplacian solver. The proposed strategy results in significant performance improvements over uniform distribution of the workload in the mixed environment consisting of faster and slower computing nodes. The effectiveness of the proposed control system increases with the problem size, thus allowing the system to be used in most demanding supercomputing environments and with large datasets. The proposed distribution control system is inherently static, i.e. the optimal distribution has to be computed in advance, before the actual computation takes place. There is a large area of possible improvements, ranging from high-availability aspects to dynamic capabilities. These can be accomplished for example by building the proposed control system as a set of libraries that can be linked with libraries (such as Open MPI libraries), thus allowing the underlying processing interface (e.g. Open MPI) to schedule tasks based on the inputs received from the proposed optimization system.

Another way of improving the capabilities of the control system is to allow calls from the parallel applications while they are running, thus bringing awareness of the possible nodes that are in the meantime down or overloaded with other applications. The proposed workload distribution control system can be especially efficiently implemented in grid environments, because the number of grid nodes is relatively small compared to the average number of computing nodes in a mid or high-end computing nodes cluster systems. For a very large number of computing nodes, the control system can be extended by building hierarchical structures with lower hierarchical levels performing optimal workload distribution directly within dedicated groups of computing nodes and higher hierarchical levels performing optimization on a set of these groups.

The proposed load-balancing (workload distribution control) system differs from all other known load-balancing systems, while it uses a novel approach of minimizing SLEM to find a theoretically best possible load distribution (a load distribution that allows a parallel algorithm to execute in a shortest time interval possible). In order to deploy SLEM minimization, a transformation of a deterministic matrix into a symmetric and doubly stochastic matrix and vice versa is utilized. This transformation is also unique, not only because other load-balancing systems do not use it.

In summary, the present invention relates to a method, apparatus, system and computer program for controlling distribution of workload in a parallel computing system. Data to be processed by the parallel computing system are decomposed into a plurality of subdomains, based on which the workload distribution between participants of the parallel computing system is controlled.

**Claims**

1. A method for controlling distribution of workload in a parallel computing system, the method comprising:

   - decomposing data to be processed by the parallel computing system into a plurality of subdomains, based on which the workload distribution between participants of the parallel computing system is controlled.

2. A method according to claim 1, further comprising:

   - collecting information about at least one of performance, utilization and throughput in the parallel computing system, wherein the workload distribution is controlled in dependency on the collected information.

3. A method according to any one of the preceding claims, wherein the parallel computing system comprises a cluster of computing nodes.

4. A method according to any one of the preceding claims, wherein the participants of the parallel computing system are interconnected by a high speed communication network.

5. A method according to any one of the preceding claims, wherein the workload distribution is controlled to minimize a computational time.

6. A method according to any one of the preceding claims, wherein the step of decomposing includes solving a Laplacian problem.

7. An apparatus for controlling distribution of workload in a parallel computing system, the apparatus being adapted to perform the steps of a method according to any one of claims 1 to 6.

8. A parallel computing system comprising an apparatus according to claim 7.

9. A computer program comprising program code means for causing a computer to carry out the steps of a method according to any one of claims 1 to 6 when the computer program is carried out on a computer.

10. A computer program product comprising a machine-readable medium storing a computer program according to claim 9.

**Amended claims in accordance with Rule 137(2) EPC.**

**1.** A method for controlling distribution of workload in a parallel computing system comprising a plurality of computing nodes (30), the method comprising:

collecting performance information about said parallel computing system;
building a deterministic data flow matrix from said performance information and a given data set to be processed by said parallel computing system;
transforming said data flow matrix to an optimizable matrix;
optimizing said optimizable matrix to comply with a given optimization criterion in order to obtain an optimized matrix;
retransforming said optimized matrix back to its deterministic form in order to obtain an optimized data flow matrix;
obtaining an optimal workload distribution on said computing nodes (30) from said optimized data flow matrix; and
decomposing said data set to be processed by said parallel computing system into a plurality of subdomains based on said optimal workload distribution, whereby said workload distribution between said computing nodes of said parallel computing system is controlled.

**2.** A method according to claim 1, wherein said collecting of performance information comprises collecting information about at least one of processing speeds, utilization and communication throughput in said parallel computing system.

**3.** A method according to any one of the preceding claims, wherein said optimizable matrix is a symmetric and doubly stochastic matrix.

**4.** A method according to any one of the preceding claims, wherein said optimization criterion comprises the minimum of the second largest eigenvalue in magnitude of said optimizable matrix.

**5.** A method according to any one of the preceding claims, wherein said computing nodes (30) form a computing nodes cluster (40).

**6.** A method according to any one of the preceding claims, wherein said computing nodes (30) are interconnected by a high speed communication network.

**7.** A method according to any one of the preceding claims, wherein said workload distribution is controlled to minimize a computational time.

**8.** An apparatus (10) for controlling distribution of workload in a parallel computing system, the apparatus being configured to perform the steps of a method according to any one of claims 1 to 7.

**9.** A parallel computing system comprising a plurality of computing nodes (30) and an apparatus (10) according to claim 8.

**10.** A computer program product comprising a machine-readable medium storing a computer program comprising program code means for causing a computer to carry out the steps of a method according to any one of claims 1 to 7 when the computer program is carried out on a computer.

Fig. 1

$$u(x,L) = 0$$

$$\nabla^2 u = 0$$

$$u(0,y) = 0$$

$$u(L,y) = u_{max}\sin(\pi\frac{y}{L})$$

$$u(x,0) = 0$$

Fig. 2

Fig. 3

Fig. 4

Fig. 5

Fig. 6

**European Patent Office**

## EUROPEAN SEARCH REPORT

Application Number

EP 07 02 5232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEXEY LASTOVETSKY ED - ANONYMOUS: "On Grid-based Matrix Partitioning for Heterogeneous Processors" PARALLEL AND DISTRIBUTED COMPUTING, 2007. ISPDC '07. SIXTH INTERNATION AL SYMPOSIUM ON, IEEE, PI, 1 July 2007 (2007-07-01), pages 1-8, XP031115646 * page 1, right-hand column, line 1 - line 18 * * page 2, right-hand column, line 10 - line 26 * * page 3, left-hand column, line 1 - line 18; figure 1 * * page 6, left-hand column, line 30 - line 32 * | 1-10 | INV. G06F9/50 |
| X | US 5 414 849 A (YAMAMOTO FUJIO [JP]) 9 May 1995 (1995-05-09) * column 3, line 34 - line 57 * * column 5, line 29 - line 40 * * column 6, line 20 - line 26 * * column 14, line 9 - line 24; figures 13a-13d * * figures 14,15 * | 1-10 | |
| X | US 2003/220960 A1 (DEMOFF JEFF S [US] ET AL) 27 November 2003 (2003-11-27) * paragraphs [0008], [0010], [0021], [0024]; figures 1,3 * | 1-10 | TECHNICAL FIELDS SEARCHED (IPC) G06F |
| X | US 6 788 302 B1 (DITLOW GARY S [US] ET AL) 7 September 2004 (2004-09-07) * column 2, line 43 - line 55; figure 3 * * column 3, line 47 - line 55 * | 1,3,4, 6-10 | |

-/--

The present search report has been drawn up for all claims

| Place of search | Date of completion of the search | Examiner |
|---|---|---|
| The Hague | 11 June 2008 | Michel, Thierry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**European Patent Office**

**EUROPEAN SEARCH REPORT**

Application Number

EP 07 02 5232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RANTAKOKKO J: "Partitioning strategies for structured multiblock grids" PARALLEL COMPUTING, ELSEVIER PUBLISHERS, AMSTERDAM, NL, vol. 26, no. 12, 1 November 2000 (2000-11-01), pages 1661-1680, XP004217061 ISSN: 0167-8191 * page 1661, line 1 - page 1666, line 5 * ----- | 1-10 | |

TECHNICAL FIELDS SEARCHED (IPC)

The present search report has been drawn up for all claims

| Place of search | Date of completion of the search | Examiner |
|---|---|---|
| The Hague | 11 June 2008 | Michel, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 02 5232

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2008

| Patent document cited in search report | | Publication date | Patent family member(s) | | Publication date |
|---|---|---|---|---|---|
| US 5414849 | A | 09-05-1995 | JP<br>JP | 3208870 B2<br>6139212 A | 17-09-2001<br>20-05-1994 |
| US 2003220960 | A1 | 27-11-2003 | GB | 2391357 A | 04-02-2004 |
| US 6788302 | B1 | 07-09-2004 | NONE | | |

EPO FORM P0459

For more details about this annex : see Official Journal of the European Patent Office, No. 12/82